Europäisches Patentamt

European Patent Office

Office européen des brevets

(19)

(11) **EP 0 564 957 B1**

(12) **EUROPÄISCHE PATENTSCHRIFT**

(45) Veröffentlichungstag und Bekanntmachung des Hinweises auf die Patenterteilung:
**14.01.1998 Patentblatt 1998/03**

(51) Int Cl.$^6$: **H04N 5/44**

(21) Anmeldenummer: **93105211.2**

(22) Anmeldetag: **30.03.1993**

(54) **Verfahren und Vorrichtung für eine interlace-progressiv-Wandlung**

Method and apparatus for interlace-progressive conversion

Méthode et dispositif de conversion entrelacé-progressif

(84) Benannte Vertragsstaaten:
**DE ES FR GB IT**

(30) Priorität: **09.04.1992 DE 4211955**

(43) Veröffentlichungstag der Anmeldung:
**13.10.1993 Patentblatt 1993/41**

(73) Patentinhaber: **DEUTSCHE THOMSON-BRANDT GMBH**
**78048 Villingen-Schwenningen (DE)**

(72) Erfinder:
• **Correa, Carlos**
**W-7730 VS-Schwenningen (DE)**

• **Stolte, John**
**W-7730 VS-Tannheim (DE)**

(74) Vertreter: **Hartnack, Wolfgang, Dipl.-Ing.**
**Deutsche Thomson-Brandt GmbH**
**Licensing & Intellectual Property,**
**Göttinger Chaussee 76**
**30453 Hannover (DE)**

(56) Entgegenhaltungen:
**EP-A- 0 391 094        EP-A- 0 477 823**

## Beschreibung

Die Erfindung betrifft ein Verfahren und eine Vorrichtung für eine Interlace-Progressiv-Wandlung.

Stand der Technik

In der Bildverarbeitung gibt es verschiedene Verfahren zur Interlace-Progressiv-Wandlung. Es gibt z.B. Fernsehgeräte, die die Zeilen in einem Halbbild jeweils verdoppeln und damit eine quasi-progressive Darstellung ermöglichen. Außerdem ist es bekannt, aufgrund der Entscheidung eines Bewegungsdetektors bei statischem Bildinhalt die beiden zugehörigen Halbbilder zusammenzuziehen und bei dynamischem Bildinhalt vertikal im Halbbild zu interpolieren.
Im ersten Fall ist der Hardware-Aufwand relativ gering, aber die resultierende Bildqualität ist bei bestimmten Bildinhalten nicht optimal. Im zweiten Fall ist die Bildqualität zwar höher, aber der Hardware-Aufwand ist es ebenfalls.

In der Interlace-Progressiv-Wandlung gemäß EP-A-0477823 wird mit einem linearen vertikal-temporalen Filter jeweils ein vorläufiger Bildpunktwert errechnet, der ermittelte Wert mit einem vertikal-temporalen Medianfilter begrenzt und mit einem zweiten Medianfilter korrigiert, dessen beide andere Eingangssignale aus dem Mittelwert der beiden vertikal benachbarten Bildpunkte und dem Mittelwert der beiden temporal benachbarten Bildpunkte bestehen.
In der Zeilenverdoppelungs-Schaltung gemäß EP-A-0391094 wird mit einem temporalen Medianfilter jeweils ein erster Bildpunktwert errechnet. Der endgültige Bildpunktwert wird mit Hilfe eines Bewegungsdetektors aus diesem ersten Bildpunktwert und einem zweiten Bildpunktwert gebildet, der aus dem Mittelwert der beiden vertikal benachbarten Bildpunkte besteht.

Erfindung

Der Erfindung liegt die Aufgabe zugrunde, ein Verfahren für eine Interlace-Progressiv-Wandlung anzugeben, bei dem mit relativ geringem Hardware-Aufwand eine gute Bildqualität ermöglicht wird. Diese Aufgabe wird durch das in Anspruch 1 angegebene Verfahren gelöst.

Zunächst wird für jeden zu ermittelnden Bildpunkt mit Hilfe eines Medianfilters eine temporale Interpolation zweier zeitlich benachbarter Bildpunkte gleicher räumlicher Lage durchgeführt. Das Ergebnis wird mit einer weiteren Medianfilterung der vertikal benachbarten Bildpunkte korrigiert. Vorteilhaft ist für diese Doppel-Medianinterpolation (DM, double median) keine Bewegungsdetektion erforderlich. Außerdem ist die DM-Interpolation rauschunempfindlich.

Im Prinzip besteht das erfindungsgemäße Verfahren darin, daß für eine interlace-progressiv-Wandlung, die Bildpunkt-Werte für das progressive Ausgangssignal mittels einer ersten, zeitlichen Medianfilterung (ME1) und einer zweiten, vertikalen Medianfilterung (ME2) gewonnen werden, wobei für die erste Medianfilterung zu dem jeweiligen Bildpunkt ($P_{2B}$) zeitlich benachbarte Interlace-Bildpunkte ($P_1$, $P_4$) gleicher räumlicher Lage und ein Mittelwert aus zu dem jeweiligen Bildpunkt vertikal benachbarten Interlace-Bildpunkten ($P_2$, $P_3$) verwendet werden und für die zweite Medianfilterung diese vertikal benachbarten Interlace-Bildpunkte und das Ausgangssignal der ersten Medianfilterung verwendet werden.

Vorteilhafte Weiterbildungen des erfindungsgemäßen Verfahrens ergeben sich aus den zugehörigen abhängigen Ansprüchen.

Der Erfindung liegt die weitere Aufgabe zugrunde, eine Vorrichtung für das erfindungsgemäße Verfahren anzugeben. Diese Aufgabe wird durch die in Anspruch 5 angegebene Vorrichtung gelöst.

Im Prinzip ist die erfindungsgemäße Vorrichtung versehen mit einem Eingang (Y), von dem Interlace-Bildpunkte ($P_4$) einem ersten Halbbildspeicher (31) und einem ersten Medianfilter (ME1) zugeführt werden, welches ebenfalls das Ausgangssignal ($P_1$) eines zweiten Halbbildspeichers (32) und das Ausgangssignal (($P_2$+$P_3$)/2) eines Mittelwertbildners (AV) empfängt, wobei das Ausgangssignal ($P_3$) des ersten Halbbild-Speichers (31) einem Zeilenspeicher (33), dem ersten Eingang des Mittelwertbildners (AV) und einem zweiten Medianfilter (ME2) zugeleitet wird und das Ausgangssignal ($P_2$) des Zeilenspeichers (33) zu dem Eingang des zweiten Halbbildspeichers (32), zu einem zweiten Eingang des Mittelwertbildners (AV) und zu dem zweiten Medianfilter (ME2) gelangt, welches ebenfalls mit dem Ausgangssignal des ersten Medianfilters (ME1) gespeist wird, wobei am Ausgang des zweiten Medianfilters (ME2) die Werte ($P_{2B}$) für die Bildpunkte des progressiven Ausgangssignals entnommen werden.

Vorteilhafte Weiterbildungen der erfindungsgemäßen Vorrichtung ergeben sich aus dem zugehörigen abhängigen Anspruch.

Zeichnungen

Anhand der Zeichnungen sind Ausführungsbeispiele der Erfindung beschrieben. Die Zeichnungen zeigen in:

Fig. 1      vertikal-temporales Abtastraster;
Fig. 2      Bildpunkte für die erfindungsgemäße Interpolation;
Fig. 3      Interlace-Progressiv-Wandler.

Ausführungsbeispiele

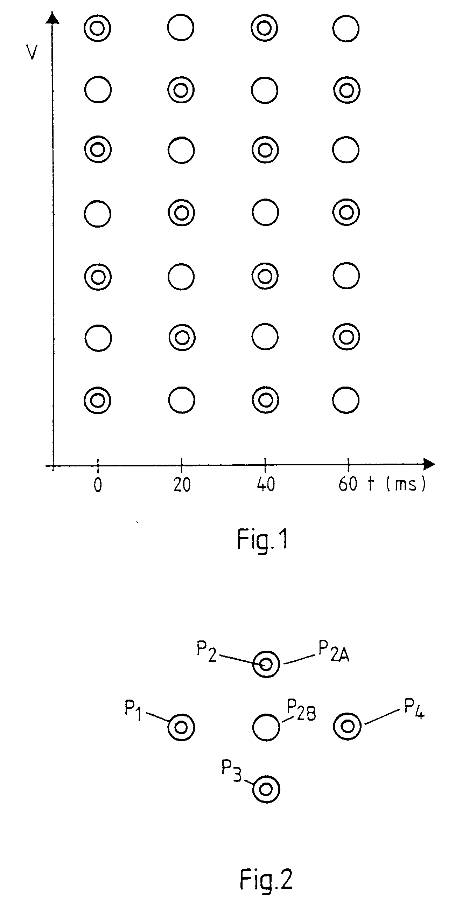

In Fig. 1 sind abgetastete Bildpunkte in der vertikaltemporalen (v, t) Ebene dargestellt. Die kleinen Kreise markieren die Bildpunkte des Interlace-Eingangssignals, z.B. 625/50/2:1, die großen Kreise markieren die Bildpunkte des progressiven Ausgangssignals, z.B. 625/50/1:1. Zum Zeitpunkt t=0ms gehört ein erstes Halbbild und zum Zeitpunkt t=20ms ein zweites.

Die Bildpunkte $P_{2A}$ und $P_{2B}$ in Fig. 2 stellen die jeweils zu ermittelnden Bildpunkte des progressiven Ausgangssignals dar. Der Luminanz- bzw. Chrominanz-Wert des Bildpunkts $P_{2B}$ wird mittels zweier Medianfilterungen aus den entsprechenden Werten der beiden vertikal ($P_2$, $P_3$) und der beiden temporal ($P_1$, $P_4$) benachbarten Bildpunkte des Interlace-Eingangssignals gewonnen. Der Wert des Bildpunkts $P_{2A}$ wird unverändert vom Bildpunkt $P_2$ übernommen.
Der Wert für $P_{2B}$ wird nach der folgenden Formel ermittelt:

$$P_{2B} = median\{P_2, P_3, median[P_1, (P_2+P_3)/2, P_4]\}$$

Bei statischem Bildinhalt ($P_1$=$P_4$) ist durch die erste, temporale Medianfilterung der Wert für $P_{2B}$ zunächst gleich $P_1$ bzw. $P_4$. Durch die zweite, vertikale Medianfilterung wird zwar die theoretisch höchste, im Vollbild übertragbare Vertikalfrequenz unterdrückt (Vollbild-Zeilen abwechselnd weißschwarz-weiß). Dieser Bildinhalt kommt aber praktisch nicht vor und würde bei normaler Interlace-Wiedergabe auch zu starkem Zwischenzeilenflimmern führen. Viel wesentlicher ist, daß vertikale Bildsignalamplituden-Sprünge mit voller Schärfe wiedergegeben werden und daß dabei trotzdem an horizontal verlaufenden Kanten kein 25Hz-Zwischenzeilenflimmern auftritt.
Bei dynamischem Bildinhalt wird durch die erste Medianfilterung die zeitliche Auflösung etwas reduziert. Falls jedoch der zunächst ermittelte Wert für $P_{2B}$ zu stark von dem vertikal benachbarten Bildinhalt abweichen sollte, wird er automatisch durch die zweite Medianfilterung korrigiert (post test).

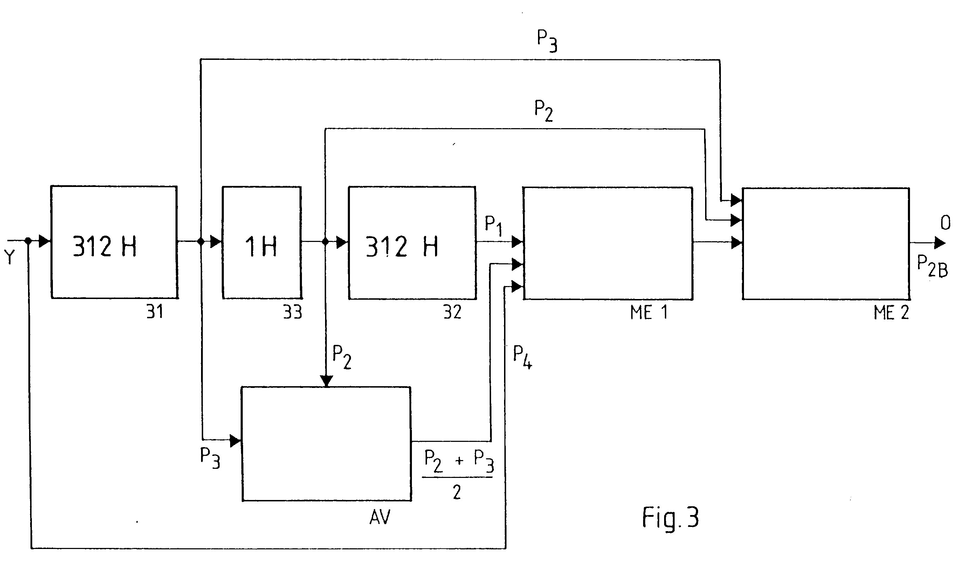

In Fig. 3 werden am Eingang Y Interlace-Bildpunkte $P_4$ einem ersten 312-Zeilenspeicher (Halbbildspeicher) 31 und einem ersten Medianfilter ME1 zugeführt, welches ebenfalls das Ausgangssignal $P_1$ eines zweiten 312-Zeilenspeichers 32 und das Ausgangssignal $(P_2+P_3)/2$ eines Mittelwertbildners AV empfängt. Das Ausgangssignal $P_3$ des Halbbild-Speichers 31 wird einem Zeilenspeicher 33, dem einen Eingang des Mittelwertbildners AV und einem zweiten Medianfilter ME2 zugeleitet. Das Ausgangssignal $P_2$ des Zeilenspeichers 33 gelangt zu dem Eingang des zweiten 312-Zeilenspeichers 32, zu dem anderen Eingang des Mittelwertbildners AV und zu dem zweiten Medianfilter ME2, welches ebenfalls mit dem Ausgangssignal des ersten Medianfilters ME1 gespeist wird. Am Ausgang O können die Werte $P_{2B}$ für die Bildpunkte des progressiven Ausgangssignals entnommen werden.

Die Werte für die Chrominanz-Bildpunkte können entweder durch eine entsprechende Doppel-Medianfilterung gewonnen werden oder durch eine vertikale Mittelung (Mittelwertbildner AV) im Halbbild mit Hilfe eines Zeilenspeichers (33) bei entsprechender zeitlicher Anpassung an die Luminanz:

$$P_{2A} = P_2, \ P_{2B} = (P_2+P_3)/2.$$

Die Erfindung kann z.B. für die Fernsehnormen PAL, SECAM, NTSC, (D2)MAC, HDMAC und MUSE mit entsprechenden Zeilenzahlen in Fernsehempfängern und Videorecordern angewendet werden. Die genannten Zahlenwerte werden dann entsprechend geändert.

## Patentansprüche

1. Verfahren für eine interlace-progressiv-Wandlung, bei dem vorläufige Bildpunkt-Werte unter Verwendung einer ersten Medianfilterung (ME1) berechnet werden und die Bildpunkt-Werte ($P_{2B}$) für das progressive Ausgangssignal mit Hilfe dieser vorläufigen Bildpunkt-Werte und einer zweiten Medianfilterung (ME2) berechnet werden, **dadurch gekennzeichnet,** daß die vorläufigen Bildpunkt-Werte mittels einer ersten, zeitlichen Medianfilterung (ME1) und einer zweiten, vertikalen Medianfilterung (ME2) gewonnen werden, wobei für die erste Medianfilterung zu dem jeweiligen Bildpunkt ($P_{2B}$) zeitlich benachbarte Interlace-Bildpunkte ($P_1$, $P_4$) gleicher räumlicher Lage und ein Mittelwert aus zu dem jeweiligen Bildpunkt vertikal benachbarten Interlace-Bildpunkten ($P_2$, $P_3$) verwendet werden und für die zweite Medianfilterung diese vertikal benachbarten Interlace-Bildpunkte und das Ausgangssignal der ersten Medianfilterung verwendet werden.

2. Verfahren nach Anspruch 1, wobei die Bildpunkte Luminanz- und Chrominanz-Bildpunkte sind.

3. Verfahren nach Anspruch 2, wobei die Chrominanz-Bildpunktwerte für das progressive Ausgangssignal durch eine Mittelung von im Halbbild vertikal benachbarten Chrominanz-Bildpunktwerten gewonnen werden, verbunden mit einer zeitlichen Anpassung an die Luminanz.

4. Verfahren nach einem oder mehreren der Ansprüche 1 bis 3, wobei in jeder zweiten Zeile für die Bildpunktwerte des progressiven Ausgangssignals die Original-Bildpunktwerte der entsprechenden Interlace-Bildpunkte verwendet werden.

5. Vorrichtung für die Ausführung eines Verfahren nach einem oder mehreren der Ansprüche 1 bis 4, versehen mit einem Eingang (Y), von dem Interlace-Bildpunkte ($P_4$) Speichermitteln (31) und einem ersten Medianfilter (ME1) zugeführt werden, dessen Ausgangssignal einem zweiten Medianfilter (ME2) zugeleitet wird, **dadurch gekennzeichnet,** daß die Speichermittel aus einem ersten Halbbildspeicher (31) bestehen und das erste Medianfilter (ME1) ebenfalls das Ausgangssignal ($P_1$) eines zweiten Halbbildspeichers (32) und das Ausgangssignal (($P_2+P_3$)/2) eines Mittelwertbildners (AV) empfängt, wobei das Ausgangssignal ($P_3$) des ersten Halbbildspeichers (31) einem Zeilenspeicher (33), dem ersten Eingang des Mittelwertbildners (AV) und dem zweiten Medianfilter (ME2) zugeleitet wird und das Ausgangssignal ($P_2$) des Zeilenspeichers (33) zu dem Eingang des zweiten Halbbildspeichers (32), zu einem zweiten Eingang des Mittelwertbildners (AV) und zu dem zweiten Medianfilter (ME2) gelangt, wobei das zweite Medianfilter (ME2) die Werte ($P_{2B}$) für die Bildpunkte des progressiven Ausgangssignals ausgibt.

6. Vorrichtung nach Anspruch 5, wobei Chrominanz-Interlace-Bildpunkte verbunden mit einer zeitlichen Anpassung an die Luminanz einem Zeilenspeicher und dem ersten Eingang eines Mittelwertbildners zugeführt werden, wobei der Ausgang des Zeilenspeichers mit einem zweiten Eingang des Mittelwertbildners verbunden ist und am Ausgang des Mittelwertbildners die Werte für die Chrominanz-Bildpunkte des progressiven Ausgangssignals entnommen werden.

## Claims

1. Method for an interlace-progressive conversion process in which interim picture element values are calculated using a first median filtering process (ME1) and the picture element values ($P_{2B}$) for the progressive output signal are calculated with the aid of these interim picture element values and a second median filtering process (ME2), characterised in that, the interim picture element values are obtained by means of a first median filtering process (ME1) in the time domain and a second vertical median filtering process (ME2), wherein, for the first median filtering process (ME1), there are used interlace picture elements ($P_1$, $P_4$) which are of like spatial position and are adjacent in time to the instantaneous picture element ($P_{2B}$) and also an average value from the interlace picture elements ($P_2$, $P_3$) that are vertically adjacent to the instantaneous picture element, and, for the second median filtering process, these vertically adjacent interlace picture elements and the output signal of the first median filtering process are used.

2. Method in accordance with Claim 1, wherein the picture elements are the luminance and the chrominance picture elements.

3. Method in accordance with Claim 2, wherein the chrominance picture element values for the progressive output signal are obtained by a process of averaging the chrominance picture element values that are vertically adjacent in the field, together with a matching in time to the luminance.

4. Method in accordance with one or more of the Claims 1 to 3, wherein the original picture element values of the corresponding interlace picture elements are used in each second line for the picture element values of the progressive output signal.

5. Device for implementing a method in accordance with one or more of the Claims 1 to 4, said device being provided with an input (Y) from which interlace picture elements ($P_4$) are supplied to storage means (31) and to a first median filter (ME1) whose output signal is conveyed to a second median filter (ME2), characterised in that, the storage means consists of a first field store (31) and the first median filter (ME1) also receives the output signal ($P_1$) from a second field store (32) and the output signal (($P_2+P_3$)/2) from an average value forming means (AV), whereby the output signal ($P_3$) of the first field store (31) is conveyed to a line store (33), to the first input of the average value forming means (AV) and to the second median filter (ME2), and the output signal ($P_2$) of the line store (33) is extended to the input of the second field store (32), to a second input of the average value forming means (AV) and to the second median filter (ME2), whereby the second median filter (ME2) supplies the values ($P_{2B}$) for the picture elements of the progressive output signal.

6. Device in accordance with Claim 5, wherein chrominance interlace picture elements are supplied to a line store and to the first input of an average value forming means together with a matching in time to the luminance, whereby the output of the line store is connected to a second input of the average value forming means and the values for the chrominance picture elements of the progressive output signal are taken from the output of the average value forming means.

## Revendications

1. Méthode de conversion entrelacé-progressif dans laquelle des éléments d'image provisoires sont calculés en utilisant un premier filtrage médian (ME1) et les éléments d'image ($P_{2B}$) destinés au signal de sortie progressif à l'aide de ces valeurs d'éléments d'image provisoires et d'un deuxième filtrage médian (ME2), caractérisée en ce que les valeurs d'élément d'image provisoires sont obtenues à l'aide d'un premier filtrage médian temporel (ME1) et d'un deuxième filtrage médian vertical (ME2), le premier filtrage médian pour l'élément d'image respectif ($P_{2B}$) utilisant des éléments d'image entrelacés ($P_1$, $P_4$) voisins sur le plan temporel et de même position spatiale et une valeur moyenne des éléments d'image entrelacés voisins ($P_2$, $P_3$) de l'élément d'image respectif sur un plan vertical et ces éléments d'image entrelacés voisins sur un plan vertical et le signal de sortie du premier filtrage médian étant utilisés pour le deuxième filtrage médian.

2. Méthode selon la revendication 1, les éléments d'image étant des éléments d'image de luminance et de chrominance.

3. Méthode selon la revendication 2, les éléments d'image de chrominance pour le signal de sortie progressif étant obtenus en établissant la moyenne des valeurs d'éléments d'image de chrominance voisins dans la trame sur un plan vertical, en combinaison avec une adaptation temporelle à la luminance.

4. Méthode selon l'une ou plusieurs des revendications 1 à 3, les éléments d'image d'origine des éléments d'image entrelacés correspondants étant utilisés dans chaque deuxième ligne pour les valeurs d'éléments d'image du signal de sortie progressif.

5. Dispositif destiné à la mise en oeuvre d'une méthode selon l'une ou plusieurs des revendications 1 à 4, pourvu d'une entrée (Y), de laquelle des éléments d'image entrelacés ($P_4$) sont amenés à des supports de stockage (31) et à un premier filtre médian (ME1), dont le signal de sortie est amené à un deuxième filtre médian (ME2), caractérisé en ce que les supports de stockage sont constitués d'une première mémoire de trame (31) et en ce que le premier filtre médian (ME1) reçoit également le signal de sortie ($P_1$) d'une deuxième mémoire de trame (32) et le signal de sortie (($P_2$+$P_3$)/2) d'un formateur de valeur moyenne (AV), le signal de sortie ($P_3$) de la première mémoire de trame (31) étant amené à une mémoire de ligne (33), à la première entrée du formateur de valeur moyenne (AV) et à un deuxième filtre médian (ME2) et le signal de sortie ($P_2$) de la mémoire de lignes (33) à l'entrée de la deuxième mémoire de trame (32), à une deuxième entrée du formateur de valeur moyenne (AV) et au deuxième filtre médian (ME2), le deuxième filtre médian (ME2) émettant les valeurs ($P_{2B}$) pour les éléments d'image du signal de sortie progressif.

6. Dispositif selon la revendication 5, des éléments d'image de chrominance combinés à une adaptation temporelle à la luminance étant amenés à une mémoire de lignes et à la première entrée d'un formateur de valeur moyenne, la sortie de la mémoire de lignes étant reliée à une deuxième entrée du formateur de valeur moyenne et les valeurs pour les éléments d'image de chrominance du signal de sortie progressif étant prélevés en sortie du formateur de valeur moyenne.

Fig.1

Fig.2

Fig. 3

EP 0 564 957 B1